# DEMANDE DE BREVET EUROPEEN

(11) **EP 1 369 222 A1**
(43) Date de publication de la demande: **10.12.2003**
(21) Numéro de dépôt: 03362006.3
(22) Date de dépôt: 27.05.2003
(51) Int. Cl.: B29C 70/24, D03D 41/00

(54) **Procédé de lacage sélectif de fils sur des préformes textiles multidimensionnelles et dispositif pour sa mise en oeuvre**

(30) Priorité: 06.06.2002 FR 0206987
(71) Demandeur: EADS launch Vehicles, 75016 Paris (FR)
(72) Inventeur: Fantino, Lucien, 33700 Merignac (FR); Glayal, Didier, 33185 Le Haillan (FR); Monget, Francois, 33700 Merignac (FR)
(74) Mandataire: Thébault, Jean-Louis

(57) **Abrégé**

- L'invention a trait à un procédé de laçage sélectif de fils sur des préformes textiles multidimensionnelles réalisées sur tiges, dans lequel on remplace les tiges par du fil, les tiges étant poussées verticalement vers le bas par une aiguille (3) du type à chas ouvrant qui, après traversée de la pièce à lacer et éjection de la tige, est ouverte en un poste (9) dit d'insertion de fil pour recevoir le fil à lacer (21), puis est remontée pour passer le fil dans l'espace libéré par ladite tige, caractérisé par les étapes suivantes :
   - on prépare au préalable une pluralité de fils (21) différents disposés en position d'attente en parallèle,
   - on achemine de manière sélective le fil (21) désiré en regard dudit poste (9) d'insertion de fil,
   - on pré-délivre la longueur nécessaire de fil sélectionné,
   - on présente et achemine le fil (21) dans le chas de l'aiguille (3) en sorte que le crochet de l'aiguille se trouve sensiblement au milieu de la longueur de fil à lacer,
   - on remonte l'aiguille (3) et le fil double (21) et, éventuellement,
   - en fin de remontée de l'aiguille on coupe le fil au droit dudit poste d'insertion (9).

## Description

La présente invention concerne la réalisation de préformes textiles pour matériaux composites à hautes performances et plus précisément le tissage de préformes textiles multidimensionnelles sur tiges.

Ces préformes comportent des fibres, continues ou non, orientées dans au moins trois directions dénommées de manière conventionnelle X, Y ou Z suivant le système de repérage orthonormé cartésien.

Dans un premier temps, on dépose des fils selon les directions X et Y, la direction Z étant momentanément matérialisée par des tiges métalliques ou autres. Dans un second temps, on remplace les tiges par du fil au cours d'une opération couramment appelée laçage.

A cet effet, dans les dispositifs connus de tissage de ce type de préforme, on fait pousser chaque tige par une aiguille du type à chas ouvrant qui traverse ainsi toute l'épaisseur ou hauteur de la pièce à lacer pour éjecter en dessous de cette dernière la tige. L'aiguille au sortir de la pièce est captée par un organe dénommé gouttière associé à un système d'ouverture du chas de l'aiguille. Le fil à lacer est alors présenté dans le chas de l'aiguille qui est ensuite remontée et tire ainsi un fil double pris dans le crochet de l'aiguille et qui prend la place que vient de libérer la tige éjectée.

Les dispositifs de laçage existants ne permettent la mise en place que d'un seul type de fil.

Quand un changement de fil de laçage est nécessaire on est obligé d'arrêter le dispositif, de faire cheminer manuellement le nouveau fil et de faire éventuellement des réglages d'adaptation.

Cette façon de procéder est évidemment onéreuse et n'est pas viable dans le cas d'une production industrielle de série comportant des changements de fils de laçage fréquents. Ces changements peuvent porter sur la composition chimique du fil, par exemple pour alterner des fibres en carbone et des fibres en Kevlar, ou sur le diamètre du fil, pour s'adapter par exemple à la géométrie de la pièce à réaliser, comme c'est le cas notamment des pièces de révolution épaisses.

Il faut dire que les dispositifs de laçage existants sont amenés à opérer dans un espace particulièrement confiné où le peu de place disponible a conduit les concepteurs à réaliser un dispositif, efficace mais limité. En effet, il s'agit de faire passer un fil entre des fils X et Y déjà en place, la surface disponible étant de l'ordre du mm², la mise en place du fil dans le chas de l'aiguille s'effectuant dans l'intervalle entre la face inférieure de la pièce à lacer et le panier de récupération des tiges, lequel doit être situé le plus près possible (quelques centimètres) de façon à conserver la géométrie de la pièce pour faire la pièce suivante. La place est encore réduite par le fait qu'on lace un fil entre des tiges encore en place.

Cet espace confiné oblige à prévoir un dispositif qui ouvre l'aiguille, puis y passe le fil à lacer par un mouvement de bascule de la direction du fil d'au moins 90°.

Le but de la présente invention est de proposer des moyens aptes à permettre un changement automatique du fil de laçage, sans avoir à arrêter le dispositif de laçage, ni à refaire de nouveaux réglages d'adaptation.

A cet effet, l'invention a pour objet un procédé de laçage sélectif de fils sur des préformes textiles multidimensionnelles réalisées sur tiges, dans lequel on remplace les tiges par du fil, les tiges étant poussées verticalement vers le bas par une aiguille du type à chas ouvrant qui, après traversée de la pièce à lacer et éjection de la tige, est ouverte en un poste dit d'insertion de fil pour recevoir le fil à lacer, puis est remontée pour passer le fil dans l'espace libéré par ladite tige, caractérisé par les étapes suivantes :
- on prépare au préalable une pluralité de fils différents disposés en position d'attente en parallèle,
- on achemine de manière sélective le fil désiré en regard dudit poste d'insertion de fil,
- on pré-délivre la longueur nécessaire de fil sélectionné,
- on présente et achemine le fil dans le chas de l'aiguille en sorte que le crochet de l'aiguille se trouve sensiblement au milieu de la longueur de fil à lacer,
- on remonte l'aiguille et le fil double et, éventuellement,
- en fin de remontée de l'aiguille on coupe le fil au droit dudit poste d'insertion.

L'invention a également pour objet un dispositif de laçage pour la mise en oeuvre du procédé ci-dessus, comprenant une aiguille de laçage à chas ouvrant, mobile verticalement en sorte de pousser et chasser hors de la pièce à lacer successivement un jeu de tiges, des moyens d'alimentation en fil de laçage et un poste d'insertion du fil de laçage dans le chas de l'aiguille en position basse de cette dernière, comportant un dispositif de captation de l'aiguille et d'ouverture du chas, caractérisé en ce qu'il comprend :
- un présentoir de fil dans l'aiguille constitué d'une pluralité de distributeurs de fil agencés en parallèle et mobiles en sorte de présenter audit poste d'insertion chacun un fil orthogonalement à l'axe de l'aiguille,
- des moyens d'acheminement d'un fil à chaque distributeur, constitués d'autant de tubes souples que de distributeurs,
- d'un moyen de propulsion pneumatique apte à déplacer le fil à l'intérieur de chaque tube,
- d'un dispositif de prédélivrage de longueur de fil, interposé entre chaque tube et une bobine de stockage du fil,
- et des moyens de captation du fil à lacer, disposés au poste d'insertion en regard du distributeur sélectionné et aptes à tirer le fil en sorte que le crochet de l'aiguille se trouve sensiblement au milieu de la longueur de fil à lacer et à lui appliquer une tension déterminée, réglable.

Suivant un mode de réalisation, ledit présentoir comprend une courroie mobile sur laquelle sont fixés lesdits distributeurs constitués chacun de moyens de fixation de l'extrémité d'un des tubes d'acheminement de fil, les orifices de sortie desdits tubes étant mobiles dans un plan parallèle à l'axe de l'aiguille et des moyens de déplacement de la courroie dans un sens ou dans l'autre en sorte d'amener l'un quelconque desdits orifices à hauteur dudit poste d'insertion de fil dans le chas de l'aiguille.

Les moyens de captation, au poste d'insertion, du fil à lacer et d'amenée en position appropriée de la longueur de fil à lacer sont avantageusement constitués d'un tube relié à une source de vide aspirant le fil et apte à le maintenir sous une certaine tension, ledit tube étant disposé à l'opposé du distributeur de fil sélectionné par rapport à l'aiguille et en regard dudit distributeur.

Un tel dispositif de laçage permet non seulement de lacer différents types de fil, de manière sélective, automatique et sans avoir à arrêter les opérations de laçage ni à faire de nouveaux réglages à chaque changement, mais assure également un laçage régulier à fil double sans glissement dans le crochet, grâce au dispositif de prédélivrage de la longueur de fil nécessaire et le placement équilibré de cette longueur de fil de part et d'autre du crochet de l'aiguille.

D'autres caractéristiques et avantages ressortiront de la description qui va suivre d'un mode de réalisation du dispositif de l'invention, description donnée à titre d'exemple uniquement et en regard des dessins annexés sur lesquels :
- les figures 1 et 2 illustrent schématiquement le principe de laçage ;
- la figure 3 est une vue schématique en élévation latérale d'un présentoir de fil de laçage selon l'invention ;
- la figure 4 est une vue de dessus du dispositif de la figure 3 ;
- les figures 5a et 5b illustrent la mise en place du fil sélectionné dans le chas de l'aiguille par le dispositif des figures 3 et 4 ;
- la figure 6 illustre schématiquement un mode de réalisation préféré des moyens d'aménagé des fils au présentoir, et
- la figure 7 illustre un mode de réalisation du dispositif de prédélivrage de fil.

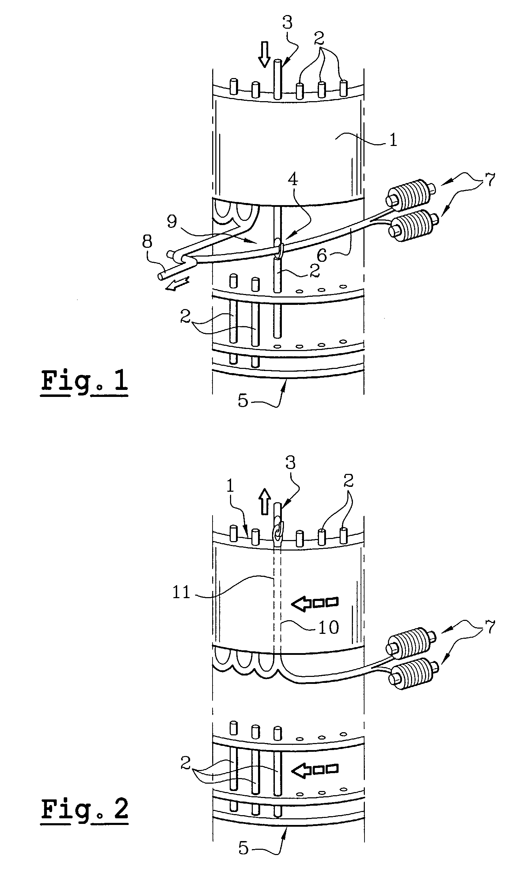

Les figures 1 et 2 illustrent le principe de laçage d'une forme textile tridimensionnelle cylindrique constituée de fils en X, Y et Z. Après la mise en place des fils en X et Y, la pièce à lacer 1 est traversée verticalement par des tiges parallèles 2 occupant les emplacements des futurs fils en Z.

Une aiguille à lacer 3, du type à chas ouvrant 4, est amenée au dessus et en regard successivement des différentes tiges 2 afin de les chasser vers le bas en direction d'un râtelier cylindrique 5 de récupération, le support de la pièce et le râtelier 5 étant entraînés en rotation pas à pas en synchronisme autour d'un axe vertical commun.

Le fil à lacer, par exemple une mèche 6 formée par réunion de plusieurs fils dévidés de bobines 7 disposées sur un cantre (non représenté), est saisi et déplacé à l'horizontale par une tirette 8 en un poste 9 dit d'insertion du fil dans l'aiguille 3 situé dans l'intervalle entre la pièce 1 et le râtelier 5, en position basse de l'aiguille 3, comme illustré par la figure 1, après extraction complète de la tige 2.

En ce poste d'insertion 9, l'aiguille 3, à la manière conventionnelle, est captée par un dispositif (non représenté) dénommé gouttière agencé au droit d'un dispositif, également bien connu et non représenté, d'ouverture du chas 4 de l'aiguille. Le fil à lacer 6 est placé au dessus du chas ouvert et l'aiguille 3 remonte avec un fil double pris dans le crochet de l'aiguille, les deux parties de fil, à savoir la partie amont tournée vers les bobines 7 et la partie aval tournée vers le fil Z qui vient d'être précédemment lacé, étant symbolisées respectivement en 10 et 11 sur la figure 2.

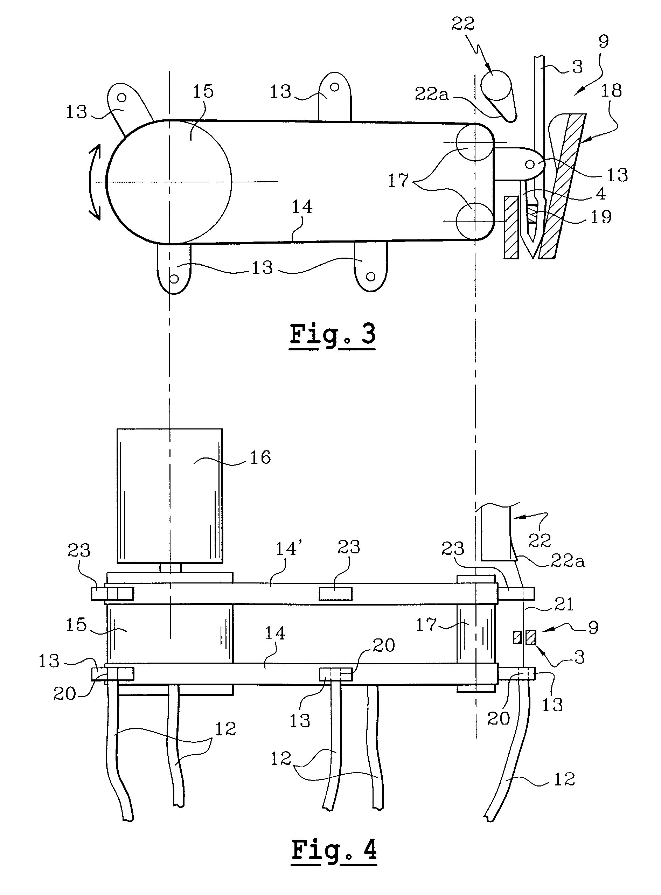

Les figures 3 et 4 représentent un présentoir selon l'invention pour amener sélectivement au poste d'insertion 9 un fil de laçage choisi parmi une pluralité de fils différents dévidés à partir de bobines respectives (non représentées) portées par un cantre.

A cet effet, chaque fil est acheminé, par un tube de guidage souple 12, à un distributeur 13 fixé sur la face externe d'une courroie crantée 14 disposée en boucle dont le plan est vertical et parallèle à l'axe de l'aiguille de laçage 3.

A titre d'exemple, cinq distributeurs 13 sont représentés sur les figures 3 et 4 en étant régulièrement répartis le long de la courroie 14, laquelle est entraînée par une poulie 15 mue par un moteur 16, piloté en position, en retrait du poste d'insertion 9, et passe sur deux poulies folles 17 situées audit poste 9 et définissant une partie de trajectoire de la courroie 14 verticale à hauteur de l'aiguille 3.

Lorsque l'aiguille 3 est dans sa position basse, au poste d'insertion 9, elle est engagée dans une gouttière de captation schématisée en 18 et un ouvreur schématisé en 19 (non représenté en figure 4) a pénétré dans l'aiguille pour ouvrir le chas 4. Sur la figure 3, un distributeur 13 se trouve à l'aplomb du débouché dudit chas 4.

Les distributeurs 13 sont de simples pièces de fixation de l'extrémité 20 d'un tube 12, les orifices des différents tubes étant ainsi alignés dans un même plan vertical et tournés du même côté .

Lorsqu'un distributeur 13 est en position d'insertion d'un fil de laçage, représenté en 21 sur la figure 4, ce distributeur se trouve en regard d'un dispositif de captation de fil, symbolisé en 22 et situé de l'autre côté de l'aiguille 3.

Le dispositif de captation de fil 22 est, conformément à l'invention, constitué d'un tube profilé d'aspiration du fil 21. Il présente donc une longueur appropriée et est relié à une source de vide (non représentée).

Le tube 22 comporte de préférence un orifice profilé en ce sens qu'il présente une extrémité définissant un bec 22a (figure 3) dirigé vers le bas en direction du chas 4 de l'aiguille.

Le tube 22 occupe une position un peu décalée au dessus du distributeur 13 en position de présentation (figure 3) du fil au dessus du chas 4 de l'aiguille et, ce, pour une raison qui sera explicitée plus loin lors de la description du fonctionnement du présentoir.

Avantageusement, le tube 22 est muni d'un étranglement de réglage de l'aspiration et par conséquent de la tension exercée sur le fil aspiré, la partie de fil stockée provisoirement dans ce tube 22 étant reliée aux fils Z précédemment lacés, à moins bien entendu qu'il s'agisse d'un premier laçage à l'aide d'un nouveau fil.

De même, avantageusement, le présentoir peut être muni d'un dispositif centreur-abaisseur de fil facilitant et rendant plus précis le positionnement du fil 21 au poste 9.

Ce dispositif peut être constitué, comme illustré par la figure 4, d'une seconde courroie 14' parallèle à la première et passant sur les mêmes poulies 15, 17.

La courroie 14' porte, en regard de chaque distributeur 13, un guide centreur-abaisseur 23 formé par exemple par un simple doigt d'accompagnement du fil 21 en synchronisme avec le distributeur 13 associé.

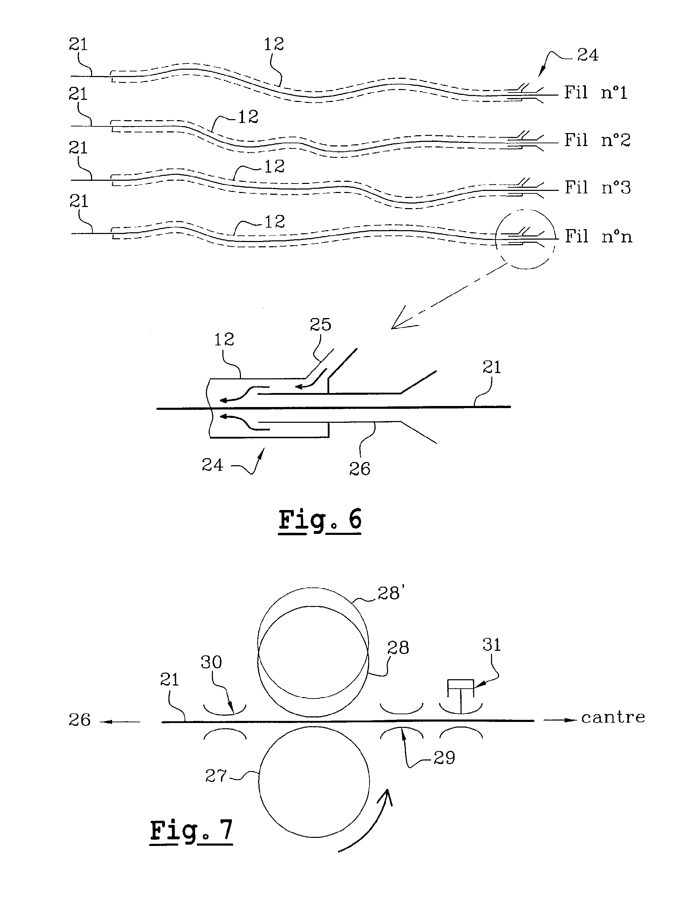

Sur la figure 6 sont représentés quatre des tubes 12 d'amenage de quatre fils de laçage différents. Sur la partie gauche de la figure 6, les tubes 12, représentés interrompus, sont reliés chacun à un distributeur 13 du présentoir de la figure 4, cependant qu'à leur autre extrémité, chaque tube 12 est muni d'un dispositif de soufflage 24 représenté agrandi dans une loupe. Cette extrémité des tubes 12 est fixe, alors que l'autre est évidemment mobile.

A cette extrémité fixe le tube 12 est obturé, alimenté en air sous pression par un conduit latéral 25 et prolongé coaxialement par un tube 26 de diamètre réduit, formant entonnoir d'introduction du fil 21 à l'intérieur du tube 12. Ce fil 21 provient d'un dispositif de prédélivrage illustré en figure 7, à chaque fil étant associé un tel dispositif.

Le dispositif de prédélivrage comprend un cylindre motorisé 27 piloté en rotation et en regard duquel est disposé un galet fou 28 mobile entre deux positions, l'une débrayée (28') à l'écart du cylindre 27 et l'autre (28) embrayée où il pince le fil 21; des guides respectivement d'entrée 29 et de sortie 30 étant prévus de part et d'autre du cylindre 27 pour guider le fil 21 qui peut être maintenu en position et tendu pendant la mise en place du fil dans le crochet de l'aiguille par un frein de fil piloté schématisé en 31.

Le fonctionnement du dispositif de laçage représenté et décrit ci-dessus est le suivant.

Tout d'abord chaque type de fil à lacer devant être utilisé pour le laçage d'une pièce 1 déterminée est mis en place manuellement.

A cet effet, les différents fils sont acheminés chacun dans un tube 12 jusqu'aux distributeurs 13. Le dispositif est alors prêt à fonctionner.

On va supposer que l'on réalise une préforme cylindrique conformément au principe de laçage illustré en figures 1 et 2, à l'aide d'une tête à lacer comprenant le système portant l'aiguille à lacer (3), les moyens de déplacement de l'aiguille, les moyens (18) de captation de l'aiguille et d'ouverture (19) du chas, ainsi que le dispositif de présentation de fil (figure 3) selon l'invention.

En une première étape, on détecte la présence par ladite tête de laçage d'une tige métallique 2 de la direction Z à lacer, cette détection commandant la sélection du fil de laçage désiré.

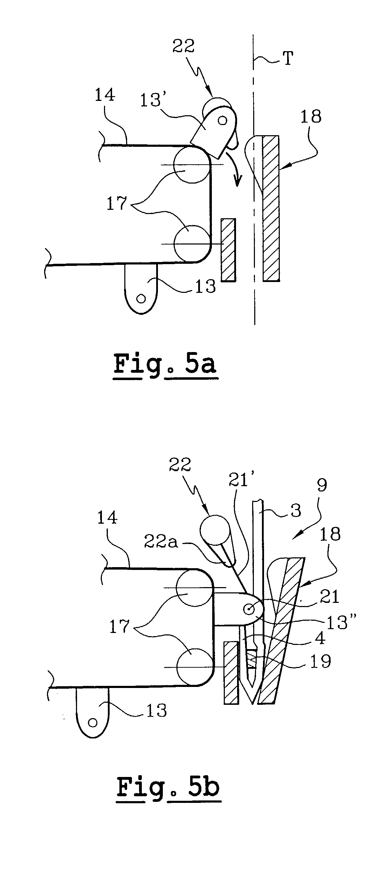

Le moteur 16 du présentoir des figures 3 et 4 est alors actionné de façon à amener le distributeur 13 affecté au fil 21 sélectionné en position repérée 13' sur la figure 5a, dite de pré-positionnement du distributeur pour la prise en charge du fil, à hauteur du tube de captation 22.

En une deuxième étape, l'aiguille 3 vient au contact de la tige à éjecter et pousse la tige.

En fin de descente de l'aiguille, celle-ci se trouve au poste d'insertion 9. Elle est, à la manière conventionnelle, captée par la gouttière 18 et son chas est ouvert par l'ouvreur 19.

Pendant cette étape, la longueur nécessaire de fil à lacer est pré-délivrée par le dispositif de la figure 7.

Cette longueur de fil nécessaire est légèrement supérieure à la hauteur de la pièce.

A cet effet, le galet 28 est pressé contre le cylindre motorisé 27 qui est entraîné sur un nombre de tours déterminé correspondant à la longueur désirée. Cette longueur de fil délivrée est poussée par le dispositif de pré-délivrage de la figure 6 en direction du tube 22. A cet effet, de l'air sous pression est envoyé dans le conduit 25 sélectionné pour forcer le fil 21 à circuler dans le tube 12 du fil concerné.

A l'autre extrémité du tube, le fil 21 est pris en charge par aspiration par le tube de captation 22 et la longueur de fil destinée au laçage, à savoir un peu plus de deux fois la hauteur de la pièce puisque le fil de laçage est double, est stocké de part et d'autre du présentoir, une moitié étant dans le tube 22 et l'autre moitié dans le tube 12.

Ensuite, le chas de l'aiguille 3 étant ouvert, le distributeur 13' avec son fil 21 est amené dans la position 13" de la figure 5b, de présentation du fil 21 à l'aplomb du chas ouvert. La portion de fil présentée au dessus du chas ouvert est horizontale, cette portion étant tendue entre le distributeur 13" et son guide centreur-abaisseur 23 associé. La partie du fil (repérée 21' sur la figure 5b) située entre le guide 23 et l'extrémité du tube de captation 22 est canalisée par le bec 22a dudit tube 22.

Le tube 22 est légèrement décalé par rapport à la trajectoire, symbolisée en T sur la figure 5a, de l'ensemble tige-aiguille, afin que la mise en place du fil 21 dans le tube 22 ne soit pas perturbée par la descente dudit ensemble tige-aiguille.

Le fil 21 est maintenu par le tube 22 en légère tension, réglable.

Outre cette mise en tension du fil, le tube de captation 22 assure l'aspiration des fibrilles et déchets de coupe (le fil 21 étant constitué d'une mèche de fils secs ensimés) remplissant ainsi une fonction d'hygiène et de sécurité pour les opérateurs.

Au poste d'insertion 9, l'aiguille 3 est captée par la gouttière 18 et son chas est ouvert par l'ouvreur 19 à la manière conventionnelle et qu'il est inutile de détailler ici.

Ensuite, l'aiguille 3 remonte en entraînant le fil 21 en double lequel est tiré par le crochet sans glissement du fil sur ce dernier. En effet, les tensions sur le fil de part et d'autre du crochet sont équilibrées. Côté cantre cette tension est celle de dévidage du fil par le cantre, le galet 28' étant débrayé et le frein 31 inactif. Cette tension est équilibré par la tension exercée par le tube de captation pendant la remontée de l'aiguille. En fin de remontée, l'aiguille replonge dans la pièce pour libérer le fil du chas.

Dans le cas où le fil de laçage suivant est différent, le fil 21 est sectionné, une fois l'aiguille totalement remontée, au poste 9, au-dessus de la gouttière 18, à l'aide par exemple d'un système classique à disque diamanté (non représenté) tournant à grande vitesse et escamotable pour laisser la place libre nécessaire au laçage suivant.

Lorsque le laçage suivant est effectué avec le même fil 21, le présentoir ne subit qu'un léger déplacement entre la position susdite de pré-positionnement où s'opère, pendant la descente de l'aiguille 3, le prédélivrage de la longueur de fil nécessaire, puis la position correcte de placement du fil 21 en regard du chas ouvert.

Le pré-délivrage s'effectue de la même manière que pour le laçage précédent, avec cette différence que la partie de fil correspondant à une hauteur de la pièce est logée dans le tube 22 en étant repliée sur elle-même puisque cette partie de fil est liée au fil lacé précédemment.

La fin du cycle de second laçage est identique à celle décrite à propos du premier laçage.

Du fait que les extrémités des tubes 12 côté prédélivrage sont fixes les courroies 14, 14' sont entraînées dans un sens puis dans l'autre pour éviter d'enrouler les tubes 12 sur eux-mêmes.

L'insertion du fil 21 dans le crochet de l'aiguille 3 se fait lors de la trajectoire verticale du distributeur 13 circulant entre les deux poulies folles 17.

Le moteur 16 est avantageusement piloté en sorte d'imprimer au distributeur les mouvements de dégagement éventuellement nécessaires.

Les courroies 14, 14' sont de préférence en matériau souple.

Les galets presseurs 28 sont sélectionnables par programmation pour choisir le fil qui doit être pré-délivré. Les dispositifs de freinage 31 sont activables indépendamment et permettent de guider les fils en position et de tendre le fil sélectionné pendant la mise en place du fil sur le crochet de l'aiguille ainsi que pendant la coupe du fil lors d'un changement de fil ou en fin de laçage.

Le dispositif de déplacement par un moyen pneumatique des fils dans les tubes 12 et 22 permet de lacer des fils fragiles tels que des fils de carbone haut module ou des fibres à base de céramiques.

Le procédé selon l'invention a été décrit dans le cadre de la réalisation d'une préforme cylindrique, mais il est évident qu'il peut s'appliquer à la réalisation de préforme « cubiques », auquel cas le râtelier porte-tige est fixe, ainsi que la préforme, la tête de laçage et le mécanisme de présentation des fils étant eux, déplacés selon les axes X et Y. En variante, la tête de laçage et le mécanisme de présentation sont fixes et c'est la pré-forme elle-même qui se déplace.

## Revendications

1. Procédé de laçage sélectif de fils sur des préformes textiles multidimensionnelles réalisées sur tiges (2), dans lequel on remplace les tiges par du fil, les tiges étant poussées verticalement vers le bas par une aiguille (3) du type à chas ouvrant qui, après traversée de la pièce à lacer (1) et éjection de la tige (2), est ouverte en un poste (9) dit d'insertion de fil pour recevoir le fil à lacer (21), puis est remontée pour passer le fil dans l'espace libéré par ladite tige, **caractérisé par** les étapes suivantes :
- on prépare au préalable une pluralité de fils (21) différents disposés en position d'attente en parallèle,
- on achemine de manière sélective le fil (21) désiré en regard dudit poste (9) d'insertion de fil,
- on pré-délivre la longueur nécessaire de fil sélectionné,
- on présente et achemine le fil (21) dans le chas (4) de l'aiguille (3) en sorte que le crochet de l'aiguille se trouve sensiblement au milieu de la longueur de fil à lacer,
- on remonte l'aiguille (3) et le fil double (21) et, éventuellement,
- en fin de remontée de l'aiguille on coupe le fil au droit dudit poste d'insertion (9).

2. Dispositif de laçage pour la mise en oeuvre du procédé suivant la revendication 1, comprenant une aiguille de laçage (3) à chas ouvrant (4), mobile verticalement en sorte de pousser et chasser hors de la pièce à lacer (1) successivement un jeu de tiges (2), des moyens d'alimentation en fil de laçage et un poste (9) d'insertion du fil de laçage dans le chas de l'aiguille en position basse de cette dernière, comportant un dispositif de captation (18) de l'aiguille (3) et d'ouverture (19) du chas (4), **caractérisé en ce qu'**il comprend :
- un présentoir de fil dans l'aiguille (3) constitué d'une pluralité de distributeurs de fil (13) agencés en parallèle et mobiles en sorte de présenter audit poste d'insertion (9) chacun un fil (21) orthogonalement à l'axe de l'aiguille (3),
- des moyens d'acheminement d'un fil (21) à chaque distributeur (13), constitués d'autant de tubes souples (12) que de distributeurs,
- d'un moyen (25) de propulsion pneumatique apte à déplacer le fil (21) à l'intérieur de chaque tube (12),
- d'un dispositif (27,28) de prédélivrage de longueur de fil, interposé entre chaque tube (12) et une bobine de stockage du fil,
- et des moyens (22) de captation du fil à lacer (21), disposés au poste d'insertion (9) en regard du distributeur (13) sélectionné et aptes à tirer le fil en sorte que le crochet de l'aiguille (3) se trouve sensiblement au milieu de la longueur de fil à lacer et à lui appliquer une tension déterminée, réglable.

3. Dispositif de laçage suivant la revendication 2, **caractérisé en ce que** ledit présentoir comprend une courroie mobile (14) sur laquelle sont fixés lesdits distributeurs (13) constitués chacun de moyens de fixation de l'extrémité d'un des tubes (12) d'acheminement de fil, les orifices de sortie desdits tubes (12) étant mobiles dans un plan parallèle à l'axe de l'aiguille (3) et des moyens (16) de déplacement de la courroie (14) dans un sens ou dans l'autre en sorte d'amener l'un quelconque desdits orifices à hauteur dudit poste (9) d'insertion de fil dans le chas de l'aiguille (3).

4. Dispositif de laçage suivant la revendication 3, **caractérisé en ce que** ladite courroie (14) est positionnée au droit du poste (9) d'insertion en sorte que les distributeurs (13) défilent parallèlement à l'axe de l'aiguille (3) et à hauteur du chas (4) de cette dernière.

5. Dispositif de laçage suivant la revendication 3 ou 4, **caractérisé en ce que** le présentoir comporte une seconde courroie (14') disposée parallèlement à la première (14) et portant des guides centreurs et abaisseurs (23) en forme de doigt en regard de chacun des distributeurs (13), les deux courroies (14, 14') étant entraînées en synchronisme.

6. Dispositif de laçage suivant l'une des revendications 2 à 5, **caractérisé en ce que** lesdits moyens de propulsion pneumatique du fil (21) dans chaque tube (12) sont constitués d'un conduit (25) alimentant en air sous pression contrôlée le tube à une extrémité de ce dernier, cette extrémité étant munie d'un tube (26) d'introduction du fil (21) en provenance desdits moyens de prédélivrage.

7. Dispositif de laçage suivant l'une des revendications 2 à 6, **caractérisé en ce que** ledit dispositif de prédélivrage de fil (21) est constitué d'un cylindre motorisé (27) associé à un galet fou (28) débrayable de pressage du fil contre ledit cylindre.

8. Dispositif de laçage suivant la revendication 7, **caractérisé en ce qu'**en amont du dispositif de prédélivrage est agencé un frein de fil piloté (31).

9. Dispositif de laçage suivant l'une des revendications 2 à 8, **caractérisé en ce que** lesdits moyens de captation du fil (21) sont constitués d'un tube (22) relié à une source de vide.

10. Dispositif de laçage suivant la revendication 9, **caractérisé en ce que** ledit tube (22) est un tube à orifice profilé (22a) de guidage du fil, muni d'un étranglement de réglage de l'aspiration.
